# EUROPÄISCHE PATENTSCHRIFT

(11) **EP 1 588 653 B1**
(45) Veröffentlichungstag und Bekanntmachung des Hinweises auf die Patenterteilung: **11.04.2007**
(21) Anmeldenummer: 05400013.8
(22) Anmeldetag: 20.04.2005
(51) Int. Cl.: A47J 31/08

(54) **Papierfilter für Aufgussgetränke**
Paper filter for infusion beverages
Filtre de papier pour boissons obtenues par infusion

(30) Priorität: 23.04.2004 DE 102004020709; 23.04.2004 DE 202004006700 U
(43) Veröffentlichungstag der Anmeldung: 26.10.2005
(73) Patentinhaber: KONOS GmbH, 01683 Nossen (DE)
(72) Erfinder: Höpper, Christian, 01623 Rausslitz (DE)
(74) Vertreter: Uhlemann, Henry

(56) Entgegenhaltungen:
- EP-A- 1 167 204
- US-A- 3 444 791

## Beschreibung

Die Erfindung betrifft Papierfilter für Aufgussgetränke vereinzelt aus einer gefalteten Papierbahn.

Bekannte Papierfilter für Aufgussgetränke insbesondere für Kaffee sind durch mehrere Veröffentlichungen bekannt, wobei wenigstens ein Seitenbereich und der Bodenbereich miteinander verbunden sind. In der Patentschrift DE 680 796 (Filtertüte in Tassenform) wird eine derartige Filtertüte ähnlich bekannter Papierbecher oder Papiersäcke beschrieben. In einer Ausführungsform sind die zu verbindenden Ränder des Zuschnittes, also die Boden- und Seitenwandkanten, mit einem U-förmigen Papierstreifen überdeckt, der durch Ränderieren befestigt wird und damit die Ränder des Zuschnittes der Filtertüte wasserdicht verbindet. Durch die DE 295 03 645 ist eine Papierfiltertüte insbesondere mit Materialverstärkungen bekannt. Diese Materialverstärkungen haben vorzugsweise beschreibenden Charakter. Die DE 299 19 609 U1 (Kaffeefilter) beinhaltet eine Variante, wobei sich innerseitig Markierungen für Kaffeemehl befinden. In der DE 199 30 427 Cl (Filterpapiereinsatz zum Herstellen von gefilterten Kaffee) weist der Filterpapiereinsatz bereichsweise Schichten zur Veränderung des Geschmacks auf.
Diese bekannten Papierfilter sind im Bodenbereich und in einem Seitenbereich verbunden, so dass die Gefahr des Zerreißens insbesondere im Bodenbereich als hauptsächlich beanspruchte Stelle besteht.
Papierfilter mit einer Bodenfalzlinie ist durch die DE 29 29 251 A 1 (Geklebte Zweinahtfiltertüte) bekannt. Eines der die Filtertüte bildenden Trapeze hat zwei seitliche Klebstoff klappen. Damit besteht die Gefahr, dass Bestandteile des Klebstoffes in den gebrühten Kaffee gelangen können.
Durch die DE 197 17 372 A 1 (Verfahren zum Herstellen eines Filters, insbesondere Kaffeefilter, sowie Filter) sind Kaffeefilter bekannt, die im Bodenbereich eine Faltkante besitzen und umgestülpt sind, so dass sich die miteinander verbundenen Randbereiche im Inneren des Kaffeefilters befinden. Eine derartige Verfahrensweise erhöht den Aufwand zur Herstellung dieser Kaffeefilter wesentlich. Weiterhin besteht die Gefahr des Aufreißens während des Umstülpens.

Die US-A-3 444 791 offenbart einen Papierfilter nach dem Oberbegriff des unabhängigen Anspruchs 1.

Der im Patentanspruch 1 angegebenen Erfindung liegt die Aufgabe zugrunde, einen Papierfilter für Aufgussgetränke mit erhöhter Zerreißfestigkeit zu schaffen.

Diese Aufgabe wird mit den im Patentanspruch 1 aufgeführten Merkmalen gelöst.

Die Papierfilter für Aufgussgetränke vereinzelt aus einer gefalteten Papierbahn zeichnen sich insbesondere durch ihre hohe Zerreißfestigkeit aus.
Papierfilter weisen bekannterweise Poren auf, so dass feste Partikel zum Beispiel als Kaffee im Papierfilter verbleiben und Flüssigkeiten als Wasser den Papierfilter durchdringen, so dass das Aufgussgetränk entsteht.
Die Faltkante der Papierbahn ist gleichzeitig der Bodenbereich des Papierfilters. Eine Prägenaht als Verbindung der übereinanderliegenden Teilbahnen an dieser Stelle ist nicht notwendig. Die Hauptbelastung des Papierfilters liegt beim Gebrauch im Bereich des Bodenbereichs. Bei ungünstigen Bedingungen oder einer fehlerhaften Prägenaht kann es bei bekannten Papierfiltern zum Aufreißen kommen. Weiterhin werden üblicherweise vor dem Platzieren des Papierfilters in die Filteraufnahme zum Beispiel der Kaffeemaschine vom Nutzer die Seitenkanten zueinander gedrückt, wobei der Bodenbereich geknickt werden kann. Dadurch kann wiederum die Prägenaht im Bodenbereich bei bekannten Papierfiltern aufreißen, so dass feste Partikel in den Behälter für das Aufgussgetränk gelangen können.
Erfindungsgemäß ist die durchgehende und in sich homogene Faltkante der Bodenbereich, so dass ein Aufreißen des Papierfilters weitestgehend verhindert wird.
Die Seitenbereiche weisen jeweils mindestens eine Prägenaht auf, so dass die Befestigung der übereinanderliegenden und den Papierfilter bildenden Teilbahnen der Papierbahn gegeben ist.

Diese Prägenähte liegen an der Filteraufnahme zum Beispiel der Kaffeemaschine an, so dass eine Gefahr eines Aufreißens des Papierfilters an diesen Stellen kaum möglich ist.
Erfindungsgemäß verlaufen die Prägezähne der Prägenaht parallel zur Faltkante und damit schräg zur Seitenkante. Das hat den Vorteil, dass die Länge der Prägezähne bei gleichzeitiger Verbesserung des optischen Eindrucks der Prägenaht vergrößerbar ist, so dass eine weitere Erhöhung der Festigkeit der Prägenaht einhergeht.
Ein weiterer Vorteil besteht darin, dass der Papierfilter symmetrisch ist, so dass eine optimale Platzierung des Papierfilters in der Filteraufnahme möglich ist.

Vorteilhafte Ausgestaltungen der Erfindung sind in den Patentansprüchen 2 bis 6 angegeben.

Vorteilhafterweise besitzen die Prägezähne nach der Weiterbildung des Patentanspruchs 2 die gleiche Länge. Damit sind gleichbleibende Festigkeitseigenschaften über die gesamte Länge der Prägenaht gegeben.

Nach der Weiterbildung des Patentanspruchs 3 weisen die Prägezähne die gleiche Länge auf und der Abstand des jeweils zweiten Prägezahns der Prägenaht von der Seitenkante des Papierfilters ist kleiner oder größer als der Abstand des jeweils ersten Prägezahns der Prägenaht. Dadurch wird der optische Eindruck eines Reißverschlusses erzielt. In Verbindung mit dem parallelen Verlauf der Prägezähne zum Bodenbereich wird die mögliche Einreißkante vergrößert, so dass eine weitere Erhöhung der Festigkeit vorhanden ist.

Mit den Ausgestaltungen der Weiterbildung des Patentanspruchs 4 werden dem Nutzer Papierfilter für bekannte Geräte zum Aufgießen von Getränken zur Verfügung gestellt. Die Winkel zwischen Faltkante und jeweils der Seitenkante des Papierfilters entsprechen vorteilhafterweise denen der Filteraufnahmen, so dass ein fester Halt in der Filteraufnahme gegeben ist.

Durch abgerundete oder abgeschrägte Eckbereiche zwischen der Seitenkante und der der Faltkante gegenüberliegenden Kante des Papierfilters nach der Weiterbildung des Patentanspruchs 5 kann der Abstand der Papierfilter gegenüber nicht abgerundeten oder abgeschrägten Eckbereichen verkleinert werden, so dass der Verschnitt beim Vereinzeln der Papierfilter aus der Papierbahn verringert wird.

Im geöffneten Zustand ist der Papierfilter nach der Weiterbildung des Patentanspruchs 6 trichterförmig ausgebildet, so dass ein Tüte vorhanden ist. Damit kann der Papierfilter in bekannte Filteraufnahmen zum Beispiel der Kaffeemaschinen leicht eingesetzt werden.

Bei der Herstellung der Papierfilter bildet die gefaltete Papierbahn die Grundlage, wobei nach dem Verfahren des Patentanspruchs 7 die Papierfilter nacheinander ausgeschnitten werden.

Die Papierfilter einer Papierbahn werden vorteilhafterweise durch die Ausgestaltung und die Anordnung von Präge- und Schnittwalzen nach den Weiterbildungen der Patentansprüche 8 und 9 hergestellt.

Ein Ausführungsbeispiel der Erfindung ist in den Zeichnungen dargestellt und wird im folgenden näher beschrieben.
Es zeigen:
- Fig. 1: einen Papierfilter mit einem vergrößertem Ausschnitt der Prägenaht und
- Fig. 2: eine Papierbahn mit zwei Papierfiltern entsprechend der Darstellung des Papierfilters der Fig. 1.

Ein Papierfilter 1 für Aufgussgetränke ist aus einer gefalteten Papierbahn 5 vereinzelt. Der Papierfilter 1 als zum Beispiel Kaffeefilter für Kaffeemaschinen weist bekannterweise Poren auf, so dass feste Partikel als Kaffee im Papierfilter 1 verbleiben und die Flüssigkeit als Wasser den Papierfilter 1 durchdringt, so dass der Kaffe als Aufgussgetränk entsteht.

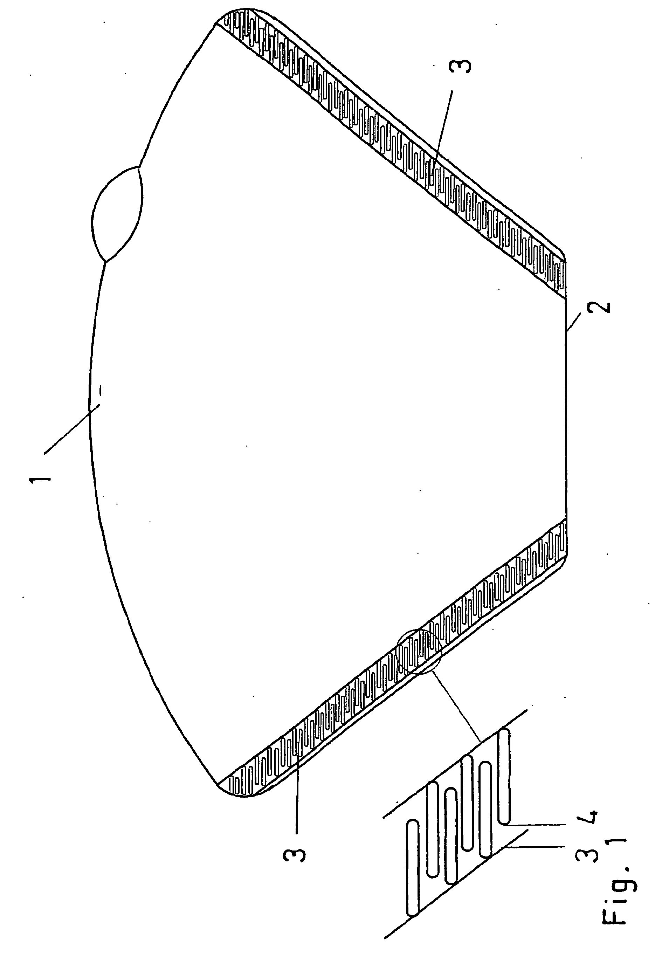

Die Fig. 1 zeigt einen Papierfilter 1 mit einem vergrößertem Ausschnitt der Prägenaht 3.

Die Faltkante 2 der gefalteten Papierbahn 5 ist gleichzeitig der Bodenbereich des Papierfilters 1. Die Seitenbereiche des Papierfilters 1 weisen jeweils eine Prägenaht 3 mit Prägezähnen 4 auf. Die Prägezähne 4 der Prägenaht 3 verlaufen parallel zur Faltkante 2. Die Prägezähne 4 besitzen die gleiche Länge. Der Abstand des jeweils zweiten Prägezahns der Prägenaht 3 von der Seitenkante des Papierfilters 1 ist kleiner als der Abstand des jeweils ersten Prägezahns der Prägenaht 3 ist (Darstellung in der Fig. 1, insbesondere der vergrößerte Ausschnitt der Prägenaht 3).
Die Faltkante 2 und jeweils die Seitenkante des Papierfilters 1 schließen einen Winkel von 130° ein und die der Faltkante 2 gegenüberliegende Kante des Papierfilters 1 verläuft bogenförmig, so dass eine bekannte Form des Papierfilters 1 vorhanden ist. Der Papierfilter 1 ist im geöffneten Zustand trichterförmig ausgebildet und passt damit in die Filteraufnahmen bekannter Kaffeemaschinen. Der Eckbereich der Seitenkante und der der Faltkante 2 gegenüberliegenden Kante des Papierfilters 1 ist abgerundet.

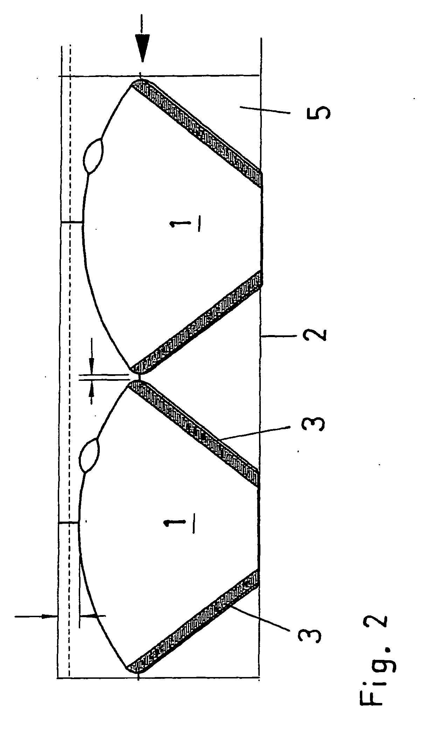

Die Papierfilter 1 werden aus der gefalteten Papierbahn 5 nacheinander geprägt und ausgeschnitten. Die Fig. 2 zeigt eine Darstellung einer gefalteten Papierbahn 5 mit zwei Papierfiltern 1. Damit sind das nacheinander geprägte und geschnittene Papierfilter 1 aus der gefalteten Papierbahn 5, wobei die Symmetrieachsen und damit die Drehachsen der Präge- und der Schnittwalze zur Realisierung der Papierfilter 1 rechtwinklig zur Faltkante 2 und zur Transportrichtung der gefalteten Papierbahn 5 angeordnet sind.

## Patentansprüche

1. Papierfilter für Aufgussgetränke vereinzelt aus einer gefalteten Papierbahn, wobei die Faltkante (2) der Bodenbereich des Papierfilters (1) ist, und die Seitenbereiche jeweils mindestens eine Prägenaht (3) aufweisen, **dadurch gekennzeichnet, dass** die Pragezähne (4) der Prägenaht (3) parallel zur Faltkante (2) verlaufen.

2. Papierfilter nach Patentanspruch 1, **dadurch gekennzeichnet, dass** die Prägezähne (4) die gleiche Länge besitzen.

3. Papierfilter nach Patentanspruch 1, **dadurch gekennzeichnet, dass** die Prägezähne (4) die gleiche Länge aufweisen und dass der Abstand des jeweils zweiten Prägezahns der Prägenaht (3) von der Seitenkante des Papierfilters (1) kleiner oder größer als der Abstand des jeweils ersten Prägezahns der Prägenaht (3) ist.

4. Papierfilter nach Patentanspruch 1, **dadurch gekennzeichnet, dass** die Faltkante (2) und jeweils die Seitenkante des Papierfilters (1) einen Winkel gleich/größer 90° und kleiner 180° einschließen und dass die der Faltkante (2) gegenüberliegende Kante des Papierfilters (1) geradlinig oder bogenförmig verläuft.

5. Papierfilter nach Patentanspruch 4, **dadurch gekennzeichnet, dass** jeweils der Eckbereich der Seitenkante und der der Faltkante (2) gegenüberliegenden Kante des Papierfilters (1) abgerundet oder abgeschrägt ist.

6. Papierfilter nach den Patentansprüchen 1 und 4, **dadurch gekennzeichnet, dass** im geöffneten Zustand der Papierfilter (1) trichterförmig ausgebildet ist.

7. Verfahren zur Herstellung von Papierfiltern nach Anspruch 1, **dadurch gekennzeichnet, dass** die nacheinander mit den Prägenähten (3) versehenen Papierfilter (1) aus der gefalteten Papierbahn (5) nacheinander ausgeschnitten werden.

8. Verfahren nach Anspruch 7, wobei mindestens zwei Reihen von Prägestempeln für die Prägenähte (3) eines Papierfilters (1) Bestandteile der Prägewalze sind.

9. Verfahren nach Anspruch 7, wobei die Symmetrieachsen und damit die Drehachsen der Präge- und der Schnittwalze zur Realisierung der Papierfilter (1) rechtwinklig zur Faltkante (2) der gefalteten Papierbahn (5) angeordnet sind.

## Claims

1. Paper filter for infusion beverages, separated from a folded paper web, whereby the bottom region of the paper filter (1) is the folding edge (2) and either side region is provided with at least one embossing seam (3), **characterized by** that the embossing teeth (4) of the embossing seam (3) run parallel to the folding edge (2).

2. Paper filter to claim 1, **characterized by** that the embossing teeth (4) have equal lengths.

3. Paper filter to claim 1, **characterized by that** the embossing teeth (4) have equal lengths and the distance of every second embossing tooth of the embossing seam (3) to the side edge of the paper filter (1) is smaller or bigger than the distance of every first embossing tooth of the embossing seam (3).

4. Paper filter to claim 1, **characterized by** that the folding edge (2) and a side edge of the paper filter (1) include an angle equal/bigger than 90°, smaller than 180° and that the edge of the paper filter (1) opposing the folding edge (2) is configured linear or arched.

5. Paper filter to claim 4, **characterized by** that each corner region of the side edge and of the edge of the paper filter (1) opposing the folding edge (2) is rounded or skewed.

6. Paper filter to claim 1 and 4, **characterized by** that in opened state, the paper filter (1) is configured funneled.

7. Process for manufacturing paper filters to claim 1, **characterized by** that the paper filters (1) provided with the embossing seams (3) after each other are cut from the folded paper web (5) after each other.

8. Process to claim 7, whereby at least two rows of embossing pins for the embossing seams (3) of a paper filter (1) are consituents of the embossing roll.

9. Process to claim 7, whereby for realizing the paper filters (1) the symmetry axes and hence, the rotational axes of the embossing roll and the cutting roll are arranged rectangular to the folding edge (2) of the folded paper web (5).

## Revendications

1. Filtre en papier pour boissons obtenues par infusion, séparé d'une feuille continue de papier pliée, sachant que le bord de pliage (2) est la région de fond du filtre en papier (1) et que les régions latérales présentent chacune au moins un joint gaufré (3), **caractérisé en ce que** les dents de gaufrage (4) du joint gaufré (3) s'étendent parallèlement au bord de pliage (2).

2. Filtre en papier selon la revendication 1, **caractérisé en ce que** les dents de gaufrage (4) ont la même longueur.

3. Filtre en papier selon la revendication 1, **caractérisé en ce que** les dents de gaufrage (4) ont la même longueur et **en ce que** la distance entre chaque deuxième dent de gaufrage du joint gaufré (3) et le bord latéral du filtre en papier (1) est inférieure ou supérieure à la distance correspondante pour chaque première dent de gaufrage du joint gaufré (3).

4. Filtre en papier selon la revendication 1, **caractérisé en ce que** le bord de pliage (2) forme avec chaque bord latéral du filtre en papier (1) un angle supérieur ou égal à 90° et inférieur à 180°, et **en ce que** le bord du filtre en papier (1) qui est opposé au bord de pliage (2) s'étend en ligne droite ou en arc.

5. Filtre en papier selon la revendication 4, **caractérisé en ce que** la région de coin respective entre chaque bord latéral et le bord du filtre en papier (1) qui est opposé au bord de pliage (2) est arrondie ou chanfreinée.

6. Filtre en papier selon les revendications 1 et 4, **caractérisé en ce que** le filtre en papier (1) est en forme d'entonnoir à l'état ouvert.

7. Procédé de fabrication de filtres en papier selon la revendication 1, **caractérisé en ce que** les filtres en papier (1) successivement pourvus des joints gaufrés (3) sont successivement détachés par coupe de la feuille continue de papier pliée (5).

8. Procédé selon la revendication 7, sachant qu'au moins deux rangées de poinçons de gaufrage pour les joints gaufrés (3) d'un filtre en papier (1) font partie du cylindre de gaufrage.

9. Procédé selon la revendication 7, sachant que les axes de symétrie et donc les axes de rotation du cylindre de gaufrage et du cylindre de coupe pour la réalisation des filtres en papier (1) sont disposés perpendiculairement au bord de pliage (2) de la feuille continue de papier pliée (5).
